# EUROPÄISCHE PATENTSCHRIFT

(11) **EP 0 330 622 B1**
(45) Veröffentlichungstag und Bekanntmachung des Hinweises auf die Patenterteilung: **28.04.1993**
(21) Anmeldenummer: 89810137.3
(22) Anmeldetag: 22.02.1989
(51) Int. Cl.: F16L 37/28, F16J 15/04

(54) **Kupplung, insbesondere Schnellverschlusskupplung für Fluidleitungen**
Coupling, especially a quick-acting coupling for fluid-ducts
Raccord, en particulier raccord rapide pour conduites de fluide

(30) Priorität: 22.02.1988 CH 644/88; 26.07.1988 CH 2841/88
(43) Veröffentlichungstag der Anmeldung: 30.08.1989
(73) Patentinhaber: Jaggi, Claude, CH-2500 Biel (CH)
(72) Erfinder: Jaggi, Claude, CH-2500 Biel (CH)
(74) Vertreter: Keller, René, Dr.

(56) Entgegenhaltungen:
- FR-A- 1 211 696
- GB-A- 552 435
- GB-A- 632 025
- US-A- 2 915 325

## Beschreibung

Die Erfindung betrifft eine Schnellverschlußkupplung für Fluidleitungen gemäß den Merkmalen des Patentanspruchs 1.

Kupplungen dieser Art dienen namentlich zur raschen, dichten Verbindung von Schläuchen oder anderer beweglicher Fluidleitungen.

Eine Kupplung dieser Art ist in der CH-A-626 696 beschrieben. Sie hat zwei Kupplungshälften, wobei die eine als Stecker- und die andere als Muffenventil mit je einem durch Federkraft in Schließlage beaufschlagten Verschlußstück ausgebildet ist, welches gegen je einen Dichtring in dichtender Anlage an einer inneren Kegelfläche der Kupplungshälfte drückt. Die Abdichtung zwischen beiden Kupplungshälften erfolgt durch einen weiteren, durch die Kupplungshälften zusammengepreßten Dichtring aus elastischem Material. Das Verschlußstück ist im gekuppelten Zustand in der Freigabestellung mittels eines Sperrbolzens verriegelbar, damit z. B. bei Druckstößen Axialbewegungen über seine Freigabestellung hinaus nicht ausgeführt werden können. Hierdurch soll im ungünstigsten Fall ein unerwünschtes Zuschlagen des Ventils mit einer vollständigen Blockierung des gesamten Systems vermieden werden. Eine Arretierung der beiden Kupplungshälften erfolgt über Arretierkugeln, die in gekuppelter Stellung in je einer Nut einer Hülse und des Steckerventils liegen. Durch weitere Nuten in einer über den Anschlußteil des Stecker- und Muffenventils verschiebbaren Hülse können die Kugeln in eine nicht arretierende Stellung gebracht werden, wobei die Arretierkugeln beim Zusammenkuppeln und Auseinanderkuppeln verschoben werden müssen, was zu Störungen z. B. infolge von Verschmutzung oder Verklemmens führen kann.

Die Dichtringe verschleißen verhältnismäßig rasch, wobei die dadurch entstehenden Undichtigkeiten zu Schäden führen, die nur durch häufige, regelmässige Wartung (Auswechseln der Dichtringe) vermieden werden können. Zum Auswechseln der Dichtringe muß die ganze Kupplung demontiert werden, was mühsam und zeitaufwendig ist und lange Abschaltzeiten der betreffenden Anlage bedingt. Bei aggressiven Flüssigkeiten oder Gasen, sowie bei hohen, tiefen oder stark wechselnden Temperaturen oder in der Umgebung radioaktiver Strahlung können elastische Dichtringe nicht verwendet werden. Hier konnten bis jetzt keine Kupplungen dieser Art eingesetzt werden. Nachteilig bei den bekannten Kupplungen dieser Art ist ferner die Vielzahl ihrer Bauteile, die sie störanfällig und teuer machen.

Weitere Kupplungen dieser Art sind in der FR-A-1288 938 und CH-A-474 010 beschrieben. Sie haben dichtende kegelförmige Flächen, an die eine elastische Dichtlippe gepreßt wird. Die elastische Lippe und/oder die kegelförmige Fläche nutzt bzw. nutzen sich beim häufigen Öffnen und Verriegeln der Kupplunghälften ab, worunter die Dichtigkeit der gesamten Kupplung leidet. Werden diese Kupplungen selten geöffnet, neigt die angepreßte Dichtlippe dazu an ihrem Gegenstück festzufressen, wodurch ein erneutes Öffnen ohne Beschädigung der Kupplung meistens nicht mehr möglich ist. Ferner kann zwischen die kegelförmigen Flächen Schmutz beim Zusammenschieben der beiden Kupplungshälften gedrückt werden, wodurch ebenfalls eine ausreichende Dichtigkeit verunmöglicht werden kann.

Ebenso wie in der CH-A-626 696 haben die in der GB-A 552,435 und der US-A 2,915,325 beschriebenen Kupplungen einen Stecker- und einen Buchsenteil, wobei der Spalt zwischen den Zylinderwänden des ineinandergeschobenen Buchsen- und Steckerteils durch wenigstens einen koaxial zur Kupplungsachse liegenden O-Ring flüssigkeitsdicht abgedichtet ist.

Eine weitere Schnellverschlußkupplung ist aus der GB-A 632,025 bekannt. Die bekannte Schnellverschlußkupplung hat zwei Kupplungshälften sowie eine federbelastete Kugel in der einen Kupplungshälfte als Verschlußteil und ein zylindrisches federbelastetes Bauteil mit konischen Umfangsteilflächen als Verschlußteil in der anderen Kupplungshälfte. Die Abdichtung zwischen der Kugel bzw. dem Bauteil und der Innenwandung eines das Fluid führenden, zylindrischen Innenraums der betreffenden Kupplungshälfte erfolgt auf einer ringförmigen Dichtlinie, gebildet durch die Auflage der gegenüber der Kupplungsachse geneigten Kugelfläche bzw. der konischen Ringfläche des Bauteils auf einer Absatzkante der Innenwandung des Innenraums.

Die als Steckerteil ausgebildete Kupplungshälfte hat an ihrer Stirnseite einen zylindrischen Ansatz, der in eine zylindrische Innenbohrung an der Stirnseite der als Buchsenteil ausgebildeten Kupplungshälfte schiebbar ist, wobei in radialen Außennuten des Ansatzes ein erster und ein zweiter Dichtring eingelegt werden können, welche beide dichtend an der Wand der Innenbohrung beim Zusammenschieben entlanggleiten. Der erste der Ansatzstirnseite benachbarte Dichtring dient dazu, Schmutz vom zweiten Dichtring fern zu halten, um wenigstens dessen Abdichtwirkung zu erhalten.

Aufgabe der Erfindung ist es, eine wartungsfreie Kupplung einfacher Bauweise für den Einsatz auch bei aggressiven Fluida, sowie innerhalb eines großen Temperaturbereichs zu schaffen. Insbesondere soll die Kupplung bei hohen, tiefen oder stark wechselnden Temperaturen, radioaktiver Strahlung, rauhen Umgebungsbedingungen und im Unterwasserbereich arbeiten.

Die erfindungsgemäße Lösung dieser Aufgabe ist Gegenstand des Patentanspruchs 1.

Der durch die Erfindung erzielte Vorteil ist im wesentlichen darin zu sehen, daß die Abdichtung der Kupplungshälften entgegen der herrschenden Meinung ohne elastische Dichtringe, kegelförmige Dichtflächen oder elastische Dichtlippen erfolgt, so daß keine Wartung erforderlich ist und sich gegenüber den bekannten Kupplungen ein vereinfachter Aufbau mit weniger Teilen ergibt, der bei Montage und Herstellung weniger Handhabungs- und Bearbeitungsschritte erfordert.

Gegenstand der Ansprüche 2 bis 13 sind bevorzugte Ausführungsformen der erfindungsgemäßen Kupplung.

Im folgenden werden Ausführungsbeispiele der erfindungsgemäßen Kupplung anhand der Zeichnungen näher erläutert. Es zeigen:
- Fig. 1: einen Längsschnitt durch eine Schnellverschlusskupplung in ausgekuppelter Stellung,
- Fig. 2: einen Längsschnitt durch die Kupplung in gekuppelter Stellung,
- Fig. 3: eine Seitenansicht eines Verschlußstücks der Kupplung,
- Fig. 4: eine Ansicht des Verschlußstücks in Blickrichtung IV in Fig. 3, und
- Fig. 5: einen Längsschnitt durch eine Variante der Kupplung in ausgekuppelter Stellung.

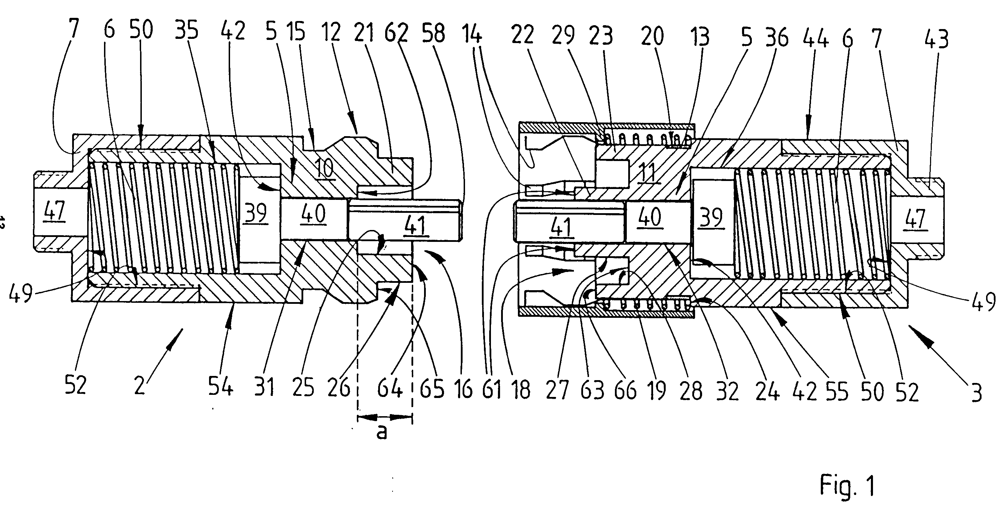

Die in den Figuren 1 bis 4 dargestellte Schnellverschlußkupplung dient zum Verbinden von flexiblen Leitungen, in denen eine Flüssigkeit wie z. B. Wasser, Öl, etc. fließt. Sie besteht aus zwei Kupplungshälften 2 und 3, wobei die Kupplungshälfte 2 als Muffenventil und die Kupplungshälfte 3 als Steckerventil ausgebildet ist. Sämtliche Teile bis auf weiter unten beschriebene Federn 6, 19, sowie federnde Klammern 14 und ein Klemmring 13 sind bei jeder der Kupplungshälften 2 und 3 aus ein- und demselben Material, bevorzugt aus Stahl, insbeondere einem korrosionsfesten Stahl hoher Härte, gefertigt; hierdurch ist deren thermischer Ausdehnungskoeffizient gleich. Materialien mit gleichen thermischen Ausdehnungskoeffizienten sind notwendig, damit wie weiter unten beschrieben, eine Spielpassung dichtender Flächen und damit deren trennende Spaltbreite erhalten bleibt, ohne bei Temperaturschwankungen der Umgebung oder des Fluids in einen nahezu unlösbaren Preßsitz oder eine leckende Paßung überzugehen. Jede der Kupplungshälften 2 und 3 hat ein Verschlußstück 5 und eine Spiralfeder 6 als Schließfeder. Der äußere Durchmesser der Spiralfeder 6 ist so gewählt, daß er um eine Spieltoleranz kleiner ist als der Durchmesser einer unten beschriebenen Bohrung 35 bzw. 36.

Das Muffenventil 2 hat einen Muffenteil 10 mit einem äußeren koaxialen Wulst 12 in der Nähe seiner dem Steckerventil 3 beim Kuppeln zugewandten Stirnseite 16, dem mit Blickrichtung auf die Stirnseite 16 eine Nut 15 nachfolgt. Das Steckerventil 3 hat einen Steckerteil 11, sowie sechs an einem geschlitzten Klemmring 13 angeschweißte federnde Zungen 14 mit hakenförmig geformten Rasten an ihren freien Enden, die über die Stirnseite 18 des Steckerteils 11 hinausragen und über die eine Hülse 17 mittels einer Spiralfeder 19 schiebbar ist. Auf den Muffenteil 10 und auf den Steckerteil 11 ist je eine Abschlußkappe 7 dicht aufgeschraubt.

Der geschlitzte Klemmring 13 sitzt klemmend in einer koaxialen Nut 20 des Steckerteils 11. Die Spiralfeder 19 liegt mit einer Spielpassung über dem Klemmring 13 und einem Teil der Länge der Zungen 14. Das eine Ende der Spiralfeder 19 ist an einem Absatz 24 des Steckerteils 11 als radiale Verlängerung der der Stirnseite 18 abgewandten Kante der Nut 20 abgestützt, das andere Ende an einem inneren annähernd koaxialen Absatz 29 der Hülse 17 etwa in deren Mitte.

Zum Kuppeln wird die Hülse 17 gegen die Kraft der Feder 19 mit der Hand zurückgeschoben, wobei jetzt die Zungen 14 federnd biegbar und somit über den Wulst 12 schiebbar sind, bis sie in der Nut 15 einrasten. Durch die Kraft der Feder 19 wird die Hülse 17 wieder über die Zungen 14 zurückgeschoben, wodurch ein radiales Ausbiegen der Zungen 14 nun unmöglich ist; beide Kupplungshälften 2 und 3 sind hierdurch gegen ein Auseinanderrutschen gesichert. In gekuppelter sowie in ausgekuppelter Stellung liegt der Ansatz 29 ausgehend vom Klemmring 13 an einer ersten von der Kupplungsachse wegweisenden Biegung der Zungen 14 an. Die Hülse 17 ist somit gegen Herunterrutschen gesichert, kann aber zur Montage und Demontage mit verstärktem Druck dennoch über die federnden Zungen 14 geschoben werden.

Der Muffenteil 10 hat an seiner Stirnseite 16 einen koaxialen, ringförmigen Vorsprung 21, und der Steckerteil 11 an seiner Stirnseite 18 einen inneren koaxialen, ringförmigen Vorsprung 22 und einen äußeren koaxialen, ringförmigen Vorsprung 23, zwischen denen eine Ringnut gebildet ist. Der Vorsprung 21 hat zwei 25 und 26, der innere Vorsprung 22 eine 27 und der äußere Vorsprung 23 eine 28 kreiszylindrische Mantelfläche. Bei zusammengesteckten Kupplungshälften 2 und 3 liegen paarweise die Flächen 25 und 27, sowie 26 und 28 mit Spielpassungen aneinander. Zwischen den beiden Flächen 25 und 27 ist ein maximaler Spalt von 5 µm; hiermit ist die Kupplung sogar heliumdicht (wird die Kupplung z. B. für Wasser verwendet, werden an die maximale Spaltbreite geringere Anforderungen gestellt). Die Mantellinien der kreiszylindrischen Mantelflächen 25, 26, 27 und 28 sind parallel zur Achse des Muffen- bzw. Steckerventils 2 bzw.3 und damit auch parallel zur Kupplungsachse und sollten möglichst keine Konizität aufweisen; die Konizität darf höchstens einige Winkelminuten betragen. Diese geringe Konizität darf nicht überschritten werden, da ansonsten das Muffenventil im Steckerventil im Betrieb als Schnellverschlußkupplung verklemmen kann.

Der Muffenteil 10 und der Steckerteil 11 haben je eine koaxiale Bohrung 31 bzw. 32, die im zusammengekuppelten Zustand bündig aneinander anschliessen, miteinander fluchten, und deren Durchmesser gleich groß sind. Die Kanten der Bohrung 30 und 31 sind scharfkantig aber gratfrei gestaltet. Die Länge der Bohrung 31 entspricht etwa dem eineinhalbfachen Wert ihres Durchmessers, und ist etwas länger als die Mantellänge der Fläche 25 bzw. 27. Wie weiter unten beschrieben, hängt die Länge der Bohrungen 31 und 32, sowie die in Fig. 1 dargestellte Mantellänge a der Flächen 25 bzw. 27 von den Fertigungstoleranzen und der gewünschten Dichtwirkung ab. Die Bohrung 31 geht an ihrem der Stirnfläche 16 zugewandten Ende scharfkantig in eine Bohrung mit der koaxialen Innenfläche 25 über, deren innerer Durchmesser bis auf eine Spielpassung gleich dem äußeren Durchmesser des ringförmigen Vorspungs 22 ist. Die Bohrung 32 setzt sich in den ringförmigen Vorsprung 22 fort. Ihre gesamte Länge ist annähernd gleich der Summe aus der Länge der Bohrung 31 plus der Mantellänge der Fläche 25.

Die Bohrung *31* bzw. *32* geht über eine zur Bohrlochachse senkrechte, radiale Stufenfläche 42 in je eine weitere Bohrung 35 bzw. 36 über, deren Durchmesser annähernd gleich sind; die Bohrlochachsen und die Achse der Kupplungshälften sind identisch. Der Durchmesser dieser Bohrungen 35 und 36 ist konstruktiv durch den Durchmesser eines unten beschriebenen Huts 39 des Verschlußstücks 5, und den Durchmesser der hierzu passenden Spiralfeder 6 festgelegt. Die Länge der Bohrung 35 bzw. 36 ergibt sich aus der Länge der vollständig zusammengedrückten Spiralfeder 6 plus der Dicke des Huts 39 plus der Länge eines unten beschriebenen Paßteils 40 des Verschlußstücks 5 plus einige Millimeter b, die wie unten beschrieben, benötig werden, damit die Flüssigkeit durch einen unten beschrieben Durchlaß- und Führungsteil 41 des Verschlußstückes 5 fließen kann.

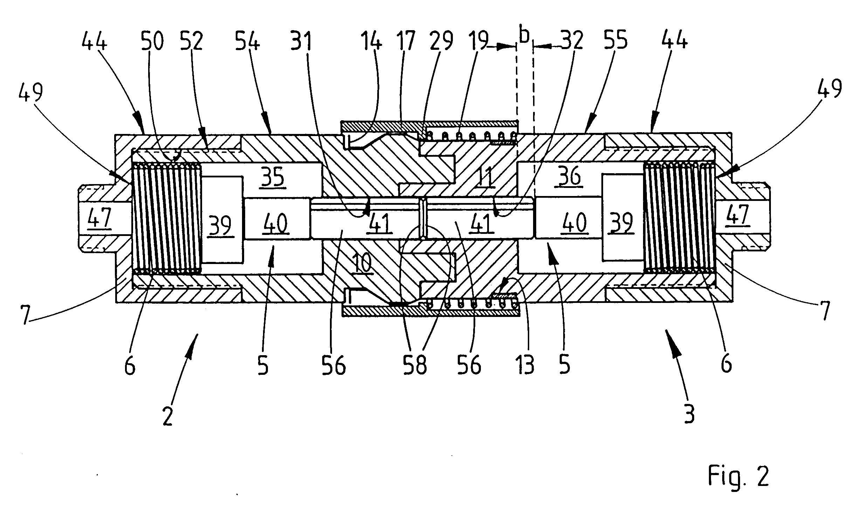

Die Abschlußkappe 7 ist, wie in den Figuren 1 und 2 dargestellt, ein einstückiges Teil mit einem koaxialen Schraubnippel 43, an den eine koaxiale Sechskantmutter 44 anschließt. Zentrisch im Schraubnippel 43 liegt eine Bohrung 47, die über eine zur ***Bohrlochachse*** senkrechte radiale Wand 49 in ein axiales Innengewinde 50 innerhalb der Sechskantmutter 44 übergeht. Die Abschlußkappe 7 wird mittels ihres Innengewindes 50 über ein Außengewinde 52 am Muffen- 10 bzw. Steckerteil 11 an der der Stirnseite 16 bzw. 18 abgewandten Seite, wie bereits oben erwähnt, geschraubt. Im montierten Zustand sitzt die Abschlußkappe 7 dicht auf dem Muffen- 10 bzw. Steckerteil 11. Die Abdichtung erfolgt durch die Wand 49, an welche die der Stirnseite 16 bzw. 18 abgewandte Stirnseite des Muffen- 10 bzw. Steckerteils 11 durch die Verschraubung gepreßt ist. Damit die Abschlußkappe 7 fest auf den Muffen- 10 bzw. Steckerteil 11 aufgeschraubt bzw. später ggf. wider abgeschraubt werden kann, ist sie ebenso wie jeweils eine Umfangsfläche 54 bzw. 55 des Muffen- 10 bzw. Steckerteils 11 als Sechskantmutter 44, wie oben erwähnt, ausgebildet.

Eine nicht dargestellte flexible Leitung bzw. ein Schlauch wird an der betreffenden Kupplungshälfte 2 bzw. 3 jeweils an einem in den Figuren 1 und 2 dargestellten Schraubnippel 43 der Abschlußkappe 7 befestigt. Anstelle eines Schraubnippels 43 kann auch ein Schlauchanschluß, der mit einer Bride festgeklemmt wird, vorgesehen sein.

Der tellerförmige Hut 39 bildet zusammen mit einem zylindrischen Bolzen als Stiel das pilzförmige Verschlußstück 5. Die Hutunter- 59 und -oberseite 60 sind zueinander annähernd parallele Flächen, die senkrecht zur Achse des Stiels liegen. Vom tellerförmigen Hut 39 fehlen zwei gegenüberliegende Kreissegmente 57, welche als Durchlaßraum für die Flüssigkeit wirken. Die Unterseite 59 des Huts 39 ist in der ausgekuppelten Stellung durch die Spiralfeder 6 an die Anschlagfläche 42 angedrückt. Die Oberseite 60 des Huts 39 dient als Auflage des einen Endes der Spiralfeder 6. Der Stiel hat auf zwei Dritteln seiner dem Hut 39 abgewandten Länge an seinem Umfang drei halbkreisförmige Aussparungen 56. Die Querschnittsflächen der beiden Kreissegmente 57 und der drei Aussparungen 56 sind annähernd gleich; durch sie fließt die Flüssigkeit im zusammengekuppelten Zustand. Der Paßteil 40 ist als Kreiszylinder ausgebildet und hat nur etwa ein Drittel der Länge des Durchlaß- und Führungsteils 41. Diese Längenverhältnisse wurden gewählt, damit, wie in Fig. 2 zu sehen ist, die Flüssigkeit in einem Abstand b zwischen dem Ende des Paßteils 40 und der Fläche 42 in die drei Aussparungen 56 ein- bzw. wieder ausfließen kann.

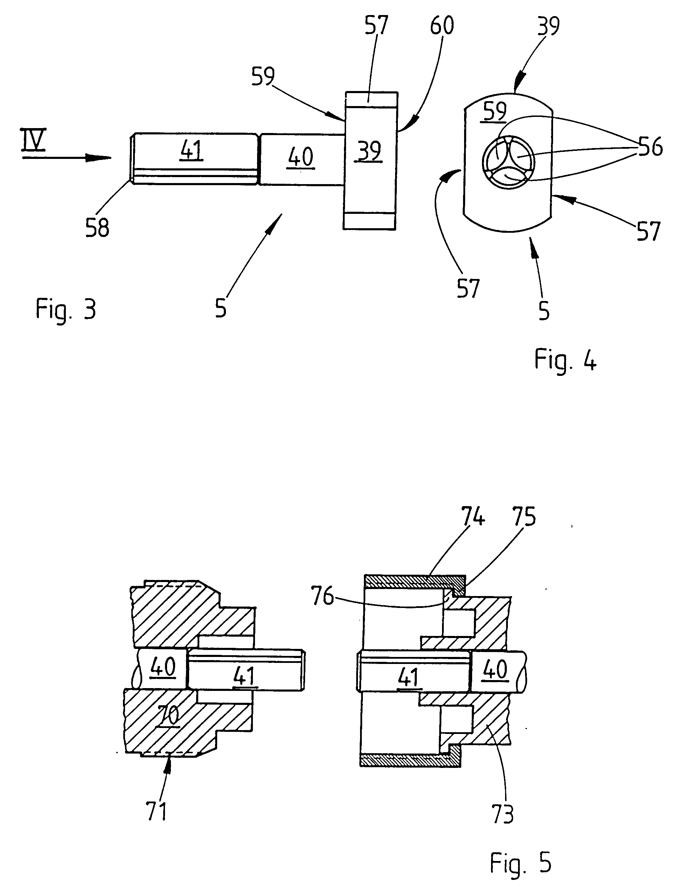

Die Verschlußstücke 5 sind in den Figuren 1 und 2 in ihrer Stielachse gegenüber der Darstellung in Figur 3 um neunzig Grad gedreht, um den freien bzw. gesperrten Weg der Flüssigkeit innerhalb der Kupplung besser darstellen zu können.

Die Durchlaß- und Führungsteile 41 der Verschlußstücke 5 liegen im zusammengekuppelten Zustand fluchtend aneinander. Die Verschlußstücke 5 sind in der Bohrung 31 bzw. 32 frei drehbar, ebenso sind auch die Kupplungshälften 2 und 3 beim Zusammenstecken frei drehbar. Es ist deshalb nicht vorherzusagen, wie die zwischen den Aussparungen 56 stehenden Stege im zusammengekuppelten Zustand aufeinander treffen werden. Die Durchlaß- und Führungsteile 41 tragen an ihrer Stirnseite eine Fase 58. Dadurch werden Durchflußschwankungen bei gegeneinander verdrehten Aussparungen 56 vermieden.

Im ausgekuppelten Zustand, wie in Fig. 1 dargestellt, steckt der Paßteil 40 des Verschlußstückes 5 mit einer Spielpassung von bevorzugt höchstens 5 µm bei Wasser als Fluid und Stahl als Material der dichtenden Teile bei einem abzudichtenden Druckunterschied von einigen zehn Atmosphären in der Bohrung 31 bzw. 32. Die Größe dieses Spaltes richtet sich nach dem Druckunterschied der abzudichtenden Flüssigkeit, der Viskosität der Flüssigkeit, der Länge des Paßstücks 40 und der verwendbaren Federkraft der Spiralfeder 6. Wie schon bei den Flächen 25 bis 28 darf die Konizität des Paßteils 40 und der Bohrungen 31 und 32 höchstens bei einigen Winkelminuten liegen.

Der Spalt ist einerseits so breit, daß sich das Verschlußstück 5 leicht verschieben läßt, und andererseits so schmal, daß eine ausreichende Abdichtung der Flüssigkeit in der Bohrung 36 gegenüber außen gewährleistet ist. Das Verschlußstück 5 muß während des Auskuppelns durch die Verschlußfeder 6 ebenso schnell nach vorne geschoben, wie die beiden Kupplungshälften 2 und 3 auseinander gezogen werden. Mit einer beliebig großen Federkraft ließe sich das jederzeit verwirklichen, die Federkraft darf jedoch nur so groß sein, daß beim Zusammenkuppeln die beiden Verschlußstücke 5 mit einem normalem Kraftaufwand von einigen Newton, wie man ihn ohne Anstrengung mit beiden Händen gegeneinander aufbringen kann, zusammenschiebbar sind.

In dem oben aufgezeigten Beispiel sind die dichtenden Spielpassungen so ausgelegt, daß sie bei einem einzigen dichtenden Flächenpaar, wie zwischen der Paßbohrung 31 bzw. 32 und dem jeweiligen Paßteil 40 höchstens fünf Mikrometern liegt. Bei mehreren radial mäanderförmig angeordneten abdichtenden Flächen, wie bei den Flächenpaaren 61/62, 25/27, 63/64, 26/28, 65/66 kann die Spielpassung bis zu einem Zehntelmillimeter betragen.

Die überraschenderweise ohne jegliche elastische Dichtringe und ohne aneinander gepresste Dichtflächen erreichte Dichtwirkung der Kupplung lässt sich vermutlich wie folgt erklären: Im Ringspalt zwischen der Bohrung 32 und dem Paßstück 40 befindet sich ein Flüssigkeitsfilm, der aufgrund seiner Haftspannung (Adhäsionskraft) sowohl an der Innenwandung der Bohrung 32 als auch auf dem Paßstück 40 haftet. Die Reibung des Paßstückes 5 innerhalb der Bohrung 32 ist analog einer Schmiermittelreibung in einem Zapfenlager. Sie ist proportional dem Zähigkeitskoeffizienten der reibenden Fläche, der Geschwindigkeit mit der das Verschlußstück 5 bewegt wird und reziprok zur Spaltbreite. Die Durchflußmenge durch den Spalt ist proportional dem Druckgefälle zwischen Innen- und Außendruck, der Querschnittsfläche des Spaltes, dem Quadrat der Spaltbreite und reziprok dem Zähigkeitskoeffizienten. Der Zähigkeitskoeffizient ist abhängig von der Temperatur des Fluids und dessen Druck. Zusammenfassend ist zu vermuten, daß die überraschende Dichtwirkung auf der Haftspannung und den Eigenschaften (Zähigkeitskoeffizient, ...) physikalisch nicht idealer Flüssigkeiten beruht.

Damit das Verschlußstück 5 bei der hohen geforderten Genauigkeit in seiner Hin- und Herbewegung nicht verklemmt, muß es exakt geführt werden. Die exakte Führung wird mittels genau eingepaßter Oberflächen der Stege zwischen den Aussparungen 56 erreicht.

Die Flächen 25 und 27, sowie 26 und 28 dichten die fließende Strömung zwischen den beiden Kupplungshälften 2 und 3 ab. Ihre Toleranzen liegen, wie oben bereits gesagt, im Mikrometerbereich. Die Genauigkeit dieser Flächen kann kleiner sein, da die Abdichtung radial mäanderförmig durch zwei Spalte zwischen den Flächen 25/27 und 26/28 erfolgt, sowie über einen weiteren Spalt zwischen zwei radialen Flächen 61 und 62 von der Bohrung 32 zur Fläche 27 und von der Bohrung 31 zur Fläche 25 und einem weiteren Spalt zwischen zwei radialen Flächen 63 und 64 von der Fläche 27 zur Fläche 28 und von der Fläche 25 zur Fläche 26, sowie durch die radial an die Fläche 26 anschließende Fläche 65, bzw. radial an die Fläche 28 anschliessende Fläche 66. Die Dichtwirkung dieser Flächenpaare 25/27, 26/28, 61/62, 63/64 und 65/66 wird noch verbessert, indem die durchfließende Strömung eine Sogwirkung auf in den Spalten befindliche Flüssigkeit ausübt.

Beim Auskuppeln wird die Hülse 17 mit der Hand zurückgeschoben und die beiden Kupplungshälften 2 und 3 gegen die klammernde Kraft der Zungen 14 am Wulst 12 auseinandergezogen. Die Spiralfeder 6 drückt beide Verschlußstücke 5 annähernd gleichmäßig aus der jeweiligen Kupplungshälfte 2 bzw. 3 heraus. Beide Durchlaß- und Führungsteile 41 berühren sich stirnseitig, der jeweilige Paßteil 40 wird in die jeweilige Paßbohrung 31 bzw. 32 geschoben und dichtet somit die Flüssigkeit im Leitungssystem hinter der betreffenden Kupplungshälfte gegen außen ab. Erst nachdem der Paßteil 40 ungefähr zwei Drittel seiner Gesamtlänge in der Paßbohrung 31 bzw. 32 sitzt, sind die Kupplungshälften soweit auseinandergezogen, daß keine Dichtwirkung der Flächenpaare 25/27, 26/28,63/64 65/66, 61/62 mehr vorhanden ist. Beim Auskuppeln tritt kein Spritzen auf, da eine Abdichtung erfolgt, bevor die dichtenden Flächen der Kupplung vollständig voneinander getrennt sind. Die Verschlußstücke 5 rutschen anschliessend noch weiter in die Paßbohrungen 31 und 32 hinein, bis die Unterseite 59 des Huts 39 an der Fläche 42 anschlägt.

Bei der Herstellung der Bauteile für die beiden Kupplungshälften 2 und 3 wird darauf geachtet, daß die Flächen 26 und 28, sowie insbesondere 25 und 27 koaxial verlaufen und möglichst keine Konizität besitzen. Die Konizität darf höchstens bei einigen Winkelminuten liegen, da ein höherer Wert die Funktionsfähigkeit der Kupplung beeinträchtigen und bei größeren Drucken zum Verklemmen beim Auseinanderziehen der Kupplungshälften führen würde. Ein Vorteil dieser koaxialen Flächen liegt darin, daß auf den Flächen 25/27 bzw. 26/28 haftender Schmutz beim Zusammenschieben der Kupplungshälften 2 und 3 weggeschoben wird.

Bei Versuchen konnte festgestellt werden, daß die Dichtwirkung erhalten bleibt, wenn die Kupplungshälften bis annähernd zur Hälfte der Mantelhöhe der Fläche 25 bzw. 27 auseinander gezogen wird. Die Dichtigkeit wird somit durch die oben beschriebene Gestaltung der beiden Flächen 25 und 27 bewirkt.

Für die Dichtigkeit des Verschlußstückes 5 gilt analoges, wobei auch hier jegliche Konizität der Mantelfläche des Paßteils 40, sowie der axialen Paßbohrung 31 bzw. 32, vermieden werden sollte.

Anstelle der oben beschriebenen Form des Huts 39 kann dieser einige Bohrungen, deren Achsen annähernd parallel zur Achse des Stiels verlaufen, haben oder z. B. als schmales Kreuz ausgebildet sein. Seine Aufgabe ist es als Auflage für das eine Ende der Spiralfeder 6 zu dienen und im ausgekuppelten Zustand an der Fläche 42 anzuschlagen, damit die Spiralfeder 6 das Verschlußstücke 5 nicht aus der betreffenden Kupplungshälfte 2 bzw. 3 herausdrückt. Ansonsten muß der Hut 39 derart geformt sein, daß das Fluid durch ihn hindurch oder an ihm vorbeiströmen kann.

Anstelle der drei Aussparungen 56 können auch mehrere Aussparungen, sowie auch Aussparungen abweichend von der dargestellten Form verwendet werden. Es müssen nur die Führungseigenschaften und ein ausreichender Durchfluß gewährleistet werden. Die dargestellte Form hat sich allerdings als optimal erwiesen.

Anstelle der sechs federnden Zungen 14 können auch drei, vier, fünf, oder mehr als sechs Zungen verwendet werden. Sechs Zungen ergeben jedoch eine gute Führung beim Zusammenschieben.

Werden an die Kupplung nicht sehr hohe Dichtigkeitsanforderungen gestellt, so können die dichtenden Flächen 26 und 28 in einer vereinfachten Konstruktion weggelassen werden.

Anstelle der federnden Zungen 14, die die beiden Kupplungshälften zusammen mit der federbelasteten Hülse 17 gegen Auseinanderrutschen sichern, kann auch eine Kupplungshälfte 70 ein Gewinde 71 und die andere Kupplungshälfte 73 eine hierzu passende Überwurfmutter 74, wie in Fig. 5 dargestellt, haben. Die Überwurfmutter 74 hat einen koaxialen Absatz 75 und die Kupplungshälfte 73 einen radialen Ansatz 76, dessen Durchmesser größer ist als der innere Durchmesser des radialen Ansatz 76. Die Überwurfmutter 74 wird vor der Schlauchmontage über die betreffende Kupplungshälfte 73 geschoben.

Anstelle der kreiszylindrischen Form der ringförmigen Vorsprünge 21, 22, 23, der Hülse 17 und der Anordnung der Zungen 14 kann auch eine asymmetrische Form, z.B. eine Nierenform, gewählt werden. Durch eine asymmetrische Form ist die gegenseitige Lage der Kupplungshälften 2 und 3 zueinander festgelegt. Wird außerdem die radiale Lage der Verschlußstücke 5 zur jeweiligen Kupplungshälfte 2 bzw. 3 derart festgelegt, daß die Aussparungen 56 der beiden Durchlaß- und Führungsteile 41 miteinander fluchten, so ist im gekuppelten Zustand immer optimaler Durchfluß vorhanden. Die radiale Lage der Verschlußstücke 5 läßt sich z. B. dadurch fixieren, daß der Hut 39 an seinem Rand nicht dargestellte Nuten oder Wulste hat, die in nicht dargestellte Erhöhungen oder Vertiefungen der Bohrung 35 bzw. 36 laufen.

Eine von der kreiszylindrischen Form abweichende Form der ringförmigen Vorsprünge 21, 22, 23, der Hülse 17 und der Anordnung der Zungen 14, z. B. nieren-, dreieck-, vieleckförmig, ermöglicht es Kupplungen mit unverwechselbaren Kupplungshälften herzustellen. Auf diese Art und Weise lassen sich ganze Kupplungsbatterien installieren, bei denen kein Verwechseln zwischen den einzelnen Kupplungshälften und Vertauschen der Fluidströme mehr möglich ist. Werden die dichtenden Flächen 25/27 und 26/28 nicht aus kreiszylindrischen Flächen gebildet, sondern aus kreiszylindrischen und ebenen rechtwinkligen Teilflächen oder nur aus Prismenflächen zusammengesetzt, so liegen die Mantellinien der kreisförmigen Teilflächen und/oder die Teilflächen bzw. die Prismenflächen parallel zu den Achsen des Muffen- bzw. Steckerventils 2 bzw.3. Anstelle einer Formänderung können auch unterschiedliche Durchmesser verwendet werden. Werden eine oder mehrere der Flächen 61, 63, 66 des Steckerteils 3 und eine oder mehrere der hierzu passenden Flächen 62, 64, 65 des Muffenteils 2 mit zueinander passenden Löchern und Stiften versehen, so läßt sich zudem eine Kodierung der Kupplungen erreichen. Es können auch nur Gewindelöcher in den Flächen 61 bis 66 vorgesehen sein, wobei dann der Benützer jeweils Stifte und mit der Oberfläche bündig abschließende Madenschrauben in die betreffenden Löcher einschraubt, um die von ihm gewünschte Kodierung zu erhalten.

Werden bei der Schnellverschlußkupplung das Verschlußstück 5 und die Spiralfeder 6 nicht eingesetzt, so kann diese Kupplung als einfache Kupplung zur Verbindung von Leitungsstücken verwendet werden.

Durch die Größe der Querschnittsfläche der Aussparungen 56 läßt sich die Durchflußmenge durch die Kupplung einstellen. D. h. die Durchflußmenge kann durch Einsetzen eines Verschlußstückes mit einer entsprechenden Querschnittsfläche der Aussparungen 56 festgelegt werden.

Anstelle der Paßbohrung 31 bzw. 32 kann auch die Bohrung 35 bzw. 36 als Paßbohrung ausgelegt sein. Der Hut 39 des Verschlußstückes 5 wird dann analog dem Paßteil 40 und dem Durchlaß- und Führungsteil 41 axial ausgebildet. Auch können die Bohrungen 31 und 32 bzw. 35 und 36 derart ausgebildet werden, daß sie die Paß- und Führungsfunktionen übernehmen. Diese Bohrungen haben dann an der Innenseite ihres von der Stirnseite 16 bzw. 18 abgewandten Teils nicht dargestellte axiale Einkerbungen, die im zusammengekuppelten Zustand das Fluid leiten. Der restliche Teil der Bohrung ist als Paßteil ausgebildet. Wird der Hut als Paß-, Durchlaß- und Führungsteil ausgebildet, muß die Schließfeder 6 als eine zentrale Feder, die nicht mehr am Hutrand aufliegt, ausgebildet werden. Diese Lösung ist konstruktiv aufwendiger, auch sind die exakten Passungen an der großen Bohrung 35 und 36 schwieriger und aufwendiger herzustellen als an der Bohrung 31 bzw. 32.

Das Verschlußstück 5 wirkt durch seine abgesetzte pilzförmige Ausbildung während des Verschiebens als variabler Druckminderer. Während des Auskuppelns erfolgt ein kontinuierlicher Druckabfall, der übermäßige Stöße im abzukuppelnden Leitungssystem verhindert.

Durch den besonderen Aufbau der Kupplung konnten Innengewinde, die den Strömungsfluß behindern würden, vermieden werden. Insbesondere wurde darauf geachtet die Bohrungen 35 bzw. 36 mit einer glatten Innenwandung zu versehen.

Wie erwähnt, besteht ein wesentlicher Vorteil der erfindungsgemässen Kupplung bzw. Schnellverschlußkupplung gegenüber herkömmlichen Kupplungen im Wegfall von elastischen Dichtelementen, die je nach durchfließendem Fluid, Umgebungstemperatur und -bedingungen, etc. speziell ausgewählt werden müssen und rasch verschliessen.

Die dichtenden Flächen 25/27, 26/28, 31/40, 32/40, bzw. die Verschlußstücke 5, der Muffen- und Steckerteil 10 und 11 können statt aus gleichem Stahl auch aus gleich behandeltem, insbesondere Oberflächen behandeltem Messing oder Aluminium bestehen. Anstelle von gleichem harten Metall können die Verschlußstücke 5, der Muffen- und Steckerteil 10 und 11 auch aus harten Kunststoff bestehen oder nur mit Kunststoff beschichtet sein.

Bei der Kupplung wurde darauf geachtet einen glatten Durchfluß ohne Spalte und Ecken, in denen sich Material anlagern könnte, zu erhalten. Aus diesem Grunde eignet sich die Kupplung insbesondere für den Lebensmittelbereich. Sie kann ferner in der chemischen Industrie und im Labor verwendet werden.

Durch entsprechende Gestaltung der stirnseitigen Flächen 61 bis 66 und 25 bis 28 von Muffen- und Steckerventil 2 und 3 können durch die Kupplung auch gasförmige Fluida geleitet werden.

Die in Anspruch 6, sowie die in Anspruch 8 angegebene Schnellverschlußkupplung kann aus Leichtmetall. z. B. Aluminium ausgeführt werden.

## Patentansprüche

1. Schnellverschlußkupplung für Fluidleitungen mit zwei zusammensteckbaren, ein durch eine Schließfeder **(6)** belastetes Verschlußstück **(5)** aufweisenden Kupplungshälften **(2, 3),** wobei das Verschlußstück **(5)** einen Paßteil **(40)** und einen vom Fluid durchströmbaren Führungs- und Duchlaßteil **(41)** sowie jede Kupplungshälfte **(2, 3)** eine Paßbohrung **(31, 32)** aufweist, in der bei ausgekuppelter, die Kupplungshälften **(2, 3)** absperrenden Stellung der Paßteil **(40)** dichtend liegt und in der bei gekuppelter, die Kupplungshälften **(2, 3)** freigebender Stellung der Führungs- und Durchlaßteil **(41)** liegt, und die Kupplungshälften **(2, 3)** zylinderförmige und/oder prismatische Dichtflächen **(25/27, 26/28)** aufweisen, wobei die Mantellinien benachbarter Dichtflächen **(25/27, 26/28)** der Kupplungshälften **(2, 3)** sowie des betreffenden Verschlußstücks **(5)** koaxial und durch eine Spielpassung voneinander getrennt verlaufen und die Passung derart gewählt ist, daß die Dichtflächen **(25/27, 26/28)** bei gekuppelten Kupplungshälften **(2, 3)** nicht gegeneinander gepreßt sind und die Passung auch ohne eingeklemmte elastische Dichtelemente fluiddicht ist.

2. Kupplung nach Anspruch 1, **dadurch gekennzeichnet**, daß die beiden Kupplungshälften **(2, 3)** je eine zylindrische Bohrung **(31, 32)** gleichen Durchmessers und je mindestens einen ringförmigen Vorsprung **(21, 22, 23)** haben, die Bohrungen **(31, 32)** bei gekuppelten Kupplungshälften **(2, 3)** bündig aneinander anschließen, miteinander fluchten und die ringförmigen Vorsprünge **(21, 22, 23)** dichtend ineinander greifen.

3. Kupplung nach Anspruch 2, **dadurch gekennzeichnet**, daß der Innendurchmesser des ringförmigen Vorsprungs **(21)** der einen Kupplungshälfte **(2)** größer als der Durchmesser der Paßbohrung **(31)** ist, zwischen der Innenmantelfläche **(25)** des Vorsprungs **(21)** und der Bohrung **(31)** eine zur Kupplungsachse wenigstens annähernd senkrechte ringförmige Stufe **(62)** gebildet ist, die Bohrung **(32)** der anderen Kupplungshälfte **(3)** durch deren ringförmigen Vorsprung **(22)** hindurchgeht, und um dessen Außenseite **(27)** eine dem Vorsprung **(21)** der einen Kupplungshälfte **(2)** angepaßte Ringnut **(27, 63, 28)** verläuft, die Dichtflächen durch die Innenmantelfläche **(25)** des ringförmigen Vorsprungs **(21)** der einen Kupplungshälfte **(2)** und die Außenmantelfläche **(27)** des ringförmigen Vorsprungs **(22)** der anderen Kupplungshälfte **(3)**, sowie die Außenmantelfläche **(26)** des Vorsprungs **(21)** der einen Kupplungshälfte **(2)** und die entsprechende Fläche **(28)** der Ringnut **(27, 63, 28)** der anderen Kupplungshälfte **(3)** gebildet sind, wobei die Stufe **(62)** und eine Stirnfläche **(61)** des Vorsprungs **(22)**, sowie ein annähernd senkrechter ringförmiger Boden **(63)** der Ringnut **(27, 63, 28)** und eine ringförmige Stirnfläche **(64)** des Vorsprungs **(21)** als Anschlagflächen für die beiden Kupplungshälften **(2, 3)** dienen.

4. Kupplung nach einem der Ansprüche 1 bis 3, **dadurch gekennzeichnet**, daß die eine Kupplungshälfte ein Außengewinde **(71)** und die andere Kupplungshälfte eine hierzu passende Überwurfmutter **(74)** hat, damit die beiden Kupplungshälften gegen Auseinanderrutschen sicherbar sind.

5. Kupplung nach einem der Ansprüche 1 bis 3, **dadurch gekennzeichnet**, daß eine der beiden Kupplungshälften **(2)** einen äußeren koaxialen Ring **(12)** und die andere Hälfte **(3)** mehrere an ihrer Außenseite befestigte, federnde Zungen **(14)** hat, die an ihrem freien Ende hakenförmig gebogen sind und in der gekuppelten Stellung über den äußeren Ring **(12)** greifen, um die Kupplung gegen Auseinanderrutschen zu sichern.

6. Kupplung nach Anspruch 5, **dadurch gekennzeichnet**, daß die andere Kupplungshälfte **(3)** eine durch eine Feder **(19)** über die Zungen **(14)** schiebbare und gegen die Kraft der Feder **(19)** zurückschiebbare Niederhalterhülse **(17)** hat, wobei die Hülse **(17)** beim Zusammenkuppeln zur Freigabe der Zungen **(14)** zurückgezogen und anschließend durch die Feder **(19)** über die Zungen **(14)** geschoben wird, so daß deren hakenförmige Enden am Ring **(12)** niedergehalten sind.

7. Kupplung nach einem der Ansprüche 1 bis 6, bei der die beiden Verschlußstücke **(5)** beim Zusammenkuppeln aneinander stoßen und gegen die Kraft der Schließfedern **(6)** bewegt werden, **dadurch gekennzeichnet**, daß jede der Schließfedern **(9)** in der gekuppelten Stellung nahezu vollständig durch das Verschlußstück **(5)** zusammengedrückt ist, so daß die Verschlußstücke **(5)** in der Freigabestellung gegen Druckstöße des Fluids gesichert fixiert sind.

8. Kupplung nach einer der Ansprüche 1 bis 7, **dadurch gekennzeichnet**, daß das Verschlußstück **(5)** pilzförmig ausgebildet ist, in jeder Kupplungshälfte **(2, 3)** ein Anschlag **(42)** gebildet ist, an dem die Unterseite **(59)** des Huts **(39)** des pilzförmigen Verschlußstücks **(5)** beim Auskuppeln anschlägt, die Oberseite **(60)** des Huts **(39)** eine Auflage für das eine Ende der Schließfeder **(6)** bildet, wobei ein mindestens eine Aussparung **(56)** zum Durchlassen des Fluids aufweisender Teil **(41)** des Stiels **(40, 41)** und/oder des Rands des Huts des pilzförmigen Verschlußstücks **(5)** den in der Paßbohrung **(31, 32)** geführten Durchlaß- und Führungsteil **(41)** und der andere Teil den Paßteil **(40)** bildet.

9. Kupplung nach Anspruch 8, **dadurch gekennzeichnet**, daß der Stiel des pilzförmigen Verschlußstücks **(5)** ein zylindrischer Bolzen ist, dessen dem Hut **(39)** abgewandter Führungs- und Durchlaßteil **(41)** am Umfang axiale Aussparungen **(56)** hat, wobei im Bereich des Huts **(39)** mindestens ein Durchlaßraum **(57)** für das Fluid vorhanden ist.

10. Kupplung nach Anspruch 9, **dadurch gekennzeichnet**, daß die gesamte Querschnittsfläche der Aussparungen **(56)** am Stiel **(40, 41)** annähernd gleich der gesamten Querschnittsfläche des Durchlaßraums **(57)** im Hutbereich **(39)** ist.

11. Kupplung nach einem der Ansprüche 1 bis 10, **dadurch gekennzeichnet**, daß an die Paßbohrung **(31, 32)** eine koaxiale zweite Bohrung **(35, 36)** anschließt und der Anschlag für die Unterseite **(59)** des Huts **(39)** zwischen den beiden Bohrungen **(31, 32, 35, 36)** als radiale Stufe **(42)** ausgebildet ist, wobei der Durchlaß- und Führungsteil **(41)** in der gekuppelten Stellung in die zweite Bohrung **(35, 36)** hineinragt.

12. Kupplung nach Anspruch 11, **dadurch gekennzeichnet**, daß der Hut **(39)** in der zweiten Bohrung **(35, 36)** bewegbar ist, und die Windungen der als Spiralfeder ausgebildeten Schließfeder **(6)** an der Wandung der zweiten Bohrung **(35, 36)** anliegen, um den Strömungswiderstand des Fluids in der zweiten Bohrung **(35, 36)** zu reduzieren.

13. Kupplung nach einem der Ansprüche 1 bis 12, **dadurch gekennzeichnet,** daß die beiden Kupplungshälften **(2, 3)** je mindestens einen ringförmigen Vorsprung **(21, 22, 23)** haben und bei gekuppelten Kupplungshälften **(2, 3)** die Vorsprünge **(21, 22, 23)** über eine erste axiale Länge **(a)** dichtend ineinander greifen und der Durchlaß- und Führungsteil **(41)** die Paßbohrung **(31, 32)** um eine zweite axiale Länge **(b)** überragt, wobei die erste Länge **(a)** mehr als doppelt so groß ist wie die zweite Länge **(b)**, damit während des Auseinanderziehens und Zusammensteckens der Kupplungshälften **(2, 3)** kein Fluid aus den Zuleitungen und/oder Kupplungshälften **(2, 3)** austreten kann.

## Claims

1. A quick seal coupling for fluid pipes with two coupling halves (2, 3) which are adapted to be fitted together and which comprise a sealing member (5) biased by a closure spring (6), the sealing member (5) having a fitting part (40) and a guide and through-flow part (41) to which the fluid is able to pass, each coupling half (2, 3) having a fitting bore (31, 32) in which the fitting part (40) is disposed in sealing-tight fashion when the coupling is uncoupled so that the coupling halves (2, 3) are shut off, and in which the guide and through-flow part (41) is disposed when the coupling is in the coupled position in which the coupling halves (2, 3) are released, the coupling halves (2, 3) having cylindrical and/or prismatic faying surfaces (25/27, 26/28),the generatrices of adjacent faying surfaces (25/27, 26/28) on the coupling halves (2, 3) and on the relevant sealing member (5) extending coaxially, separated from one another by a clearance fit which is so chosen that when the coupling halves (2, 3) are coupled, the faying surfaces (25/27, 26/28) are not pressed against one another, the fit being fluid-tight even without any resilient sealing elements being clamped in between them.

2. A coupling according to claim 1, characterised in that the two coupling halves (2, 3) each comprise a cylindrical bore (31, 32) of the same diameter and in that each has at least one annular projection (21, 22, 23) and in that when the coupling halves (2, 3) are coupled, the bores (31, 32) are flush with each other in their adjacent relationship, are aligned with each other and in that the annular projections (21, 22, 23) engage one another in sealing-tight manner.

3. A coupling according to claim 2, characterised in that the inside diameter of the annular projection (21) of one coupling half (2) is greater than the diameter of the fitting bore (31) and in that there is formed between the inner surface (25) of the projection (21) and the bore (31) and annular step which is at least approximately perpendicular to the coupling axis, the bore (32) of the other coupling half (3) passing through its annular projection (22) and in that there is extending around its exterior (27) an annular groove (27, 63, 28) adapted to the projection (21) on the one coupling half (2), the faying surfaces being formed by the inner surface (25) of the annular projection (21) of the one coupling half (2) and the outer surface (27) of the annular projection (22) of the other coupling half (3), the outer surface (26) of the projection (21) of the one coupling half (2) and the corresponding surface (28) of the annular groove (27, 63, 28) of the other coupling half, the step (62) and an end face (61) of the projection (22), and an approximately perpendicular annular bottom (63) of the annular groove (27, 63, 28) and an annular end face (64) of the projection (21) serving as abutment surfaces for the two coupling halves (2, 3).

4. A coupling according to one of claims 1 to 3, characterised in that one coupling half has an external screwthread (71) while the other coupling half has a matching cap nut (74) so that the two coupling halves can be secured against slipping apart from each other.

5. A coupling according to one of claims 1 to 3, characterised in that one of the two coupling halves (2) has an outer coaxial ring (12) while the other half (3) has, fixed on its outside, a plurality of resilient tongues (14) which are bent over in a hook shape at their free end and which, in the coupled position, engage over the outer ring (12) in order to secure the coupling against its slipping apart.

6. A coupling according to claim 5, characterised in that the other coupling half (3) comprises a depressor sleeve (17) adapted to be pushed over the tongues (14) by a spring (19) and pushed back against the force of the spring (19), the sleeve (17) being pulled back during coupling together in order to release the tongues (14) and then being pushed over the tongues (14) by the spring (19) so that the hook-shaped ends of the tongues are held down on the ring (12).

7. A coupling according to one of claims 1 to 6, in which the two sealing members (5) abut each other when the coupling is being fitted together and are moved against the force of the closure springs (6), characterised in that each of the closure springs (9) is, in the coupled position, almost entirely compressed by the sealing member (5) so that the sealing members (5) are fixed in the open position and are protected from pressure surges in the fluid.

8. A coupling according to one of claims 1 to 7, characterised in that the sealing member (5) is mushroom-shaped and in that there is formed in each coupling half (2, 3) an abutment (42) against which, during uncoupling, the under side (59) of the cap (39) of the mushroom-shaped sealing member (5) abuts while the top (60) of the cap (39) forms a support for one end of the closure spring (6), a part (41) of the stem (40, 41) and/or of the edge of the cap of the mushroom-shaped sealing member (5) in which there is at least one aperture (56) to allow the passage of fluid forms the guide and through-flow part (41) which is guided in the fitting bore (31, 32) while the other part forms the fitting part (40).

9. A coupling according to claim 8, characterised in that the stem of the mushroom-shaped sealing member (5) is a cylindrical bolt, of which the guide and through-flow part (41) remote from the cap (39) has axial recesses (56) around its periphery, at least one through-flow space (57) for fluid being provided in the region of the cap (39).

10. A coupling according to claim 8, characterised in that the total cross-sectional area of the recesses (56) on the stem (40, 41) is approximately equal to the total cross-sectional area of the through-flow space (57) in the region of the cap (39).

11. A coupling according to one of claims 1 to 10, characterised in that adjacent the fitting bore (31, 32) is a coaxial second bore (35, 36), the abutment for the under side (59) of the cap (39) being constructed as a radial step (42) between the two bores (31, 32, 35, 36), the guide and through-flow part (41) projecting into the second bore (35, 36) when the coupling is in the coupled position.

12. A coupling according to claim 11, characterised in that the cap (39) is adapted for movement in the second bore (35, 36), the turns of the closure spring (6) which is constructed as a coiled spring, bearing on the wall of the second bore (35, 36) in order to reduce the resistance to fluid flow in the second bore (35, 36).

13. A coupling according to one of claims 1 to 12, characterised in that the two coupling halves (2, 3) each have at least one annular projection (21, 22, 23) and in that, when the coupling halves (2, 3) are coupled, the projections (21, 22, 23) engage one another in sealing-tight fashion over a first axial length (a), the guide and through-flow part (41) projecting beyond the fitting bore (31, 32) by a second axial length (b), the first length (a) being more than twice as great as the second length (b) so that no fluid is able to escape from the supply pipes and(or coupling halves (2, 3) while the coupling halves (2, 3) are being separated from and fitted to each other.

## Revendications

1. Raccord rapide pour conduites à fluide comprenant deux moitiés (2, 3) pouvant être enfoncées l'une dans l'autre, comprenant un élément de fermeture (5) sollicité par un ressort de fermeture (6), l'élément de fermeture (5) comportant un élément ajusté (40) et un élément de guidage et de passage (41) par lequel peut passer le fluide, et chaque moitié (2 ou 3) du raccord comportant un alésage ajusté (31, 32) dans lequel l'élément ajusté (40) s'applique de façon étanche dans la position désaccouplée fermant les moitiés (2, 3) du raccord, et dans lequel se dispose l'élément de guidage et de passage (41) dans la position accouplée des moitiés (2, 3) du raccord, et les moitiés (2, 3) du raccord présentant des surfaces d'étanchéité de forme cylindrique et/ou prismatiques (25/27, 26/28), les lignes directrices des surfaces d'étanchéité voisines (25/27, 26/28) des moitiés (2, 3) du raccord ainsi que de l'élément de fermeture correspondant (5) étant séparées les unes des autres coaxialement par un ajustement avec'eu et l'ajustement étant choisi de manière que les surfaces d'étanchéité (25/27, 26/28), lorsque les moitiés (2, 3) du raccord sont accouplées, ne soient pas pressées l'une contre l'autre et que l'ajustement soit étanche aux fluides sans aucun élément d'étanchéité élastique serré à l'intérieur.

2. Raccord selon la revendication 1, caractérisé en ce que les deux moitiés (2, 3) du raccord comprennent chacune un alésage cylindrique (31, 32) de même diamètre et chacune au moins un prolongement de forme annulaire (21, 22, 23), les alésages (31, 32) se raccordant l'un à l'autre en bout à bout et en alignement mutuel quand les moitiés (2, 3) du raccord sont accouplées, et les prolongements de forme annulaire (21, 22, 23) pénétrant de façon étanche les uns dans les autres.

3. Raccord selon la revendication 2, caractérisé en ce que le diamètre interne du prolongement de forme annulaire (21) de l'une (2) des moitiés du raccord est supérieur au diamètre de l'alésage ajusté (31), en ce qu'un gradin (62) de forme annulaire et au moins approximativement perpendiculaire à l'axe du raccord est formé entre la surface d'enveloppe interne (25) du prolongement (21) et de l'alésage (31), l'alésage (32) de l'autre moitié (3) du raccord se prolongeant par son prolongement de forme annulaire (22), et une gorge annulaire (27, 63, 28) étant constituée sur son côté externe (27), qui est adaptée au prolongement (21) de la moitié (2) du raccord, les surfaces d'étanchéité étant constituées par la surface d'enveloppe interne (25) du prolongement annulaire (21) de la moitié (2) du raccord et la surface d'enveloppe externe (27) du prolongement de forme annulaire (22) de l'autre moitié (3) du raccord, ainsi que la surface d'enveloppe externe (26) du prolongement (21) de la moitié (2) du raccord et la surface correspondante (28) de la gorge annulaire (27, 63, 28) de l'autre moitié (3) du raccord, le gradin (62) et la surface frontale (61) du prolongement (22) ainsi que le fond (63) de forme annulaire et approximativement perpendiculaire de la gorge annulaire (27, 63, 28) et une surface frontale de forme annulaire (64) du prolongement (21) servant de surfaces d'appui pour les deux moitiés (2, 3) du raccord.

4. Raccord selon l'une quelconque des revendications 1 à 3, caractérisé en ce qu'une moitié du raccord comprend un filetage externe (71) et l'autre moitié du raccord un écrou d'accouplement (74) qui lui est adapté de manière que les deux moitiés du raccord ne puissent pas se dégager l'une de l'autre en glissant.

5. Raccord selon l'une quelconque des revendications 1 à 3, caractérisé en ce que l'une (2) des deux moitiés du raccord comprend un anneau coaxial externe (12) et l'autre moitié (3) plusieurs languettes élastiques (14) fixées sur son côté externe, qui sont coudées en forme de crochets à leur extrémité libre et qui s'appliquent à l'état accouplé sur l'anneau externe (12) de manière à empêcher le raccord de se dégager en glissant.

6. Raccord selon la revendication 5, caractérisé en ce que l'autre moitié (3) du raccord comprend un manchon de retenue (17) pouvant être déplacé par un ressort (19) sur les languettes (14) et ramené en arrière à l'encontre de la force du ressort (19), le manchon (17) étant ramené en arrière lors de l'accouplement pour libérer les languettes (14) et poussé ensuite par le ressort (19) sur les languettes (14) de manière que leurs extrémité en forme de crochets soient retenues sur l'anneau (12).

7. Raccord selon l'une quelconque des revendications 1 à 6, dans lequel les deux éléments de fermeture (5) viennent s'appliquer l'un contre l'autre lors de l'accouplement et sont déplacés à l'encontre de la force des ressorts de fermeture (6), caractérisé en ce que chacun des ressorts de fermeture (9) est pratiquement complètement comprimé par l'élément de fermeture dans la position accouplée, de manière que les éléments de fermeture (5) soient fiablement fixés dans la position de passage libre à l'encontre des chocs dus à la pression du fluide.

8. Raccord selon l'une quelconque des revendications 1 à 7, caractérisé en ce que l'élément de fermeture (5) est constitué sous la forme d'un champignon, une butée (42) étant constituée dans chaque moitié (2, 3) du raccord, butée contre laquelle vient buter le côté inférieur (59) du chapeau (39) de l'élément de fermeture en forme de champignon (5) lors du désaccouplement, le côté supérieur (60) du chapeau (39) formant un appui pour une extrémité du ressort de fermeture (6), une partie (41) de la tige (40, 41) et/ou du bord du chapeau de l'élément de fermeture en forme de champignon (5) comprenant au moins un évidement (56) pour laisser passer le fluide et formant l'élément de passage et de guidage passant dans l'alésage ajusté (31, 32) et l'autre partie formant l'élément ajusté (40).

9. Raccord selon la revendication 8, caractérisé en ce que la tige de l'élément de fermeture en forme de champignon (5) est un tourillon de forme cylindrique dont l'élément de guidage et de passage (41) qui est à l'opposé du chapeau (39) comprend périphériquement des évidements axiaux (56), au moins un espace de passage (57) pour le fluide étant prévu dans la région du chapeau (39).

10. Raccord selon la revendication 9, caractérisé en ce que la surface en section d'ensemble des évidements (56) de la tige (40, 41) est approximativement égale à la surface en section d'ensemble de l'espace de passage (57) dans la région du chapeau (39).

11. Raccord selon l'une quelconque des revendications 1 à 10, caractérisé en ce qu'un second alésage coaxial (35, 36) est raccordé à l'alésage ajusté (31, 32) et la butée destinée au côté inférieur (50) du chapeau (39) entre les deux alésages (31, 32, 35, 36) est constituée sous forme d'un gradin radial (42), l'élément de passage et de guidage (41) pénétrant dans la position accouplée dans le second alésage (35, 36).

12. Raccord selon la revendication 11, caractérisé en ce que le chapeau (39) est mobile dans le second alésage (35, 36) et les spires du ressort de fermeture (6) constitué sous forme d'un ressort spiral s'appliquent contre la paroi du second alésage (35, 36) de manière à réduire la résistance à l'écoulement du fluide dans le second alésage (35, 36).

13. Raccord selon l'une quelconque des revendications 1 à 12, caractérisé en ce que les deux moitiés (2, 3) du raccord comprennent chacune au moins un prolongement de forme annulaire (21, 22, 23) et lorsque les moitiés (2, 3) du raccord sont accouplées, les prolongements (21, 22, 23) s'interpénètrent de façon étanche sur une première longueur axiale (a) et l'élément de passage et de guidage (41) dépasse l'alésage ajusté (31) d'une seconde longueur axiale (b), la première longueur (a) étant plus du double de la seconde longueur (b) de manière que pendant l'écartement et le rapprochement des moitiés (2, 3) du raccord, aucun fluide ne puisse sortir des conduites et/ou des moitiés (2, 3) du raccord.
